# EUROPEAN PATENT SPECIFICATION

(11) **EP 3 221 563 B1**
(45) Date of publication and mention of the grant of the patent: **04.12.2019**
(21) Application number: 15800914.2
(22) Date of filing: 19.11.2015
(51) Int. Cl.: F01D 9/02, F01D 17/14, F02B 37/22, F02C 6/12

(54) **FLOW CONTROL DEVICE FOR A TURBOCHARGER**
TURBOLADER MIT MENGENREGELUNGSEINHEIT
TURBOCOMPRESSEUR AVEC UNITÉ DE CONTRÔLE DE DÉBIT

(30) Priority: 19.11.2014 GB 201420559
(43) Date of publication of application: 27.09.2017
(73) Proprietor: Brunel University London, Uxbridge Middlesex UB8 3PH (GB)
(72) Inventor: PESIRIDIS, Apostolos, Uxbridge Middlesex UB8 3PH (GB)
(74) Representative: Williams Powell
(86) International application number: PCT/GB2015/053529
(87) International publication number: WO 2016/079523

(56) References cited:
- EP-A1- 0 187 486
- WO-A1-98/14691
- WO-A2-2012/071254
- DE-C1- 3 941 399
- GB-A- 2 461 720

## Description

### FIELD

This invention relates to a turbocharger having a turbine of either axial or mixed flow geometry. It specifically relates to a flow control device for a turbocharger having a turbine of either axial or mixed flow geometry and a turbocharger comprising the same. It also relates to an engine comprising the turbocharger and to a vehicle comprising the engine.

### BACKGROUND

Turbochargers for gasoline and diesel internal combustion engines are known devices used in the art for pressurising the intake air stream, routed to a combustion chamber of the engine, by using the heat and volumetric flow of exhaust gas exiting the engine. Specifically, the exhaust gas exiting the engine is routed into a turbine housing of a turbocharger in a manner that causes an exhaust gas-driven turbine to spin within the housing. The exhaust gas-driven turbine is mounted onto one end of a shaft that is common to a radial air compressor mounted onto an opposite end of the shaft. Thus, rotary action of the turbine also causes the air compressor to spin within a compressor housing of the turbocharger that is separate from the exhaust housing. The spinning action of the air compressor causes intake air to enter the compressor housing and be pressurised to a desired amount before it is mixed with fuel and combusted within the engine combustion chamber. Alternative, designs may use more than one compressors mounted on the same shaft in order to increase the volumetric flow rate of air exiting the compressor stages and introduced into the engine combustion chambers through the intake manifold piping connecting the engine combustion chambers and the compressor exit. Such a compressor arrangement uses therefore a multiple compressors being driven by one turbine (multi-stage compression which in its most common form is known as Dual Boost or Dual-Stage Turbocharger).

One known example of a Dual Boost Turbocharger is described in EP2378130A2. An example of an exhaust recirculation device for a turbocharger is given in JP S63253115 (Isuzu Motors).

The amount by which the intake air is pressurized is controlled by regulating the amount of exhaust gas that is passed through the turbine housing by a wastegate and/or by selectively opening or closing an exhaust gas channel or passage to the turbine. Turbochargers that are constructed having such adjustable exhaust gas channels ("flow restrictors") are referred to as variable geometry turbines (VGTs), variable nozzle turbines (VNTs), variable turbine geometries (VTGs) or variable flow turbines (VFTs). The most common abbreviation is VGT. VGTs typically include a movable member that is positioned within a turbine housing between the exhaust gas source and the turbine. The movable member is actuated from outside the turbine housing by a suitable actuating mechanism to increase or decrease the volumetric flowrate of exhaust gas to the turbine such that it is appropriate for by the current engine operating conditions. Increasing or decreasing the volumetric flowrate of exhaust gas to the turbine respectively increases or decreases the intake air boost pressure generated by the compressor mounted on the other end of the turbine shaft.

One known VGT is described in US6158956.

Conventional Variable Geometry Turbochargers (VGTs) have seen widespread application in diesel engine applications where they provide matching of the turbine inlet geometry to the characteristics of the exhaust gas stream throughout the engine operating range beyond the selected optimum design point, according to which, fixed geometry turbochargers were designed in the first place. This has led to a reduction in particle emissions, higher boost especially at the lower speeds, low load conditions, leading therefore to increased available torque and improved acceleration at the lower part of the engine operating envelope. In addition, turbocharger lag performance has improved dramatically. However, fixed geometry waste gate controlled turbines have remained the standard for gasoline for several reasons. These include higher exhaust gas temperatures, cost and a much higher gasoline engine air mass flow variability. For this reason, mixed flow turbines initially, followed up by axial turbines, have been developed to achieve higher efficiencies while reducing inertia.

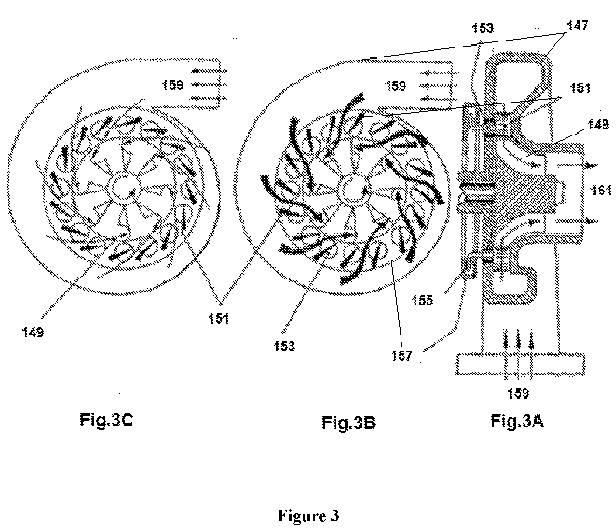

A radial turbine is a turbine in which the flow of the working fluid is radial to the shaft (see Fig. 3). Examples of radial turbines are disclosed in US 4,586,336 (BBC Brown, Boveri & Co. Ltd.) and WO 2010/068558 (Borg-Warner Inc.). There are two types of turbine rotors which deviate from the radial-inflow turbine rotor geometry predominantly used in turbocharger turbines. In the case of mixed flow turbines, exhaust gas enters the turbine rotor at an intermediate (mixed) angle between the axial (in relation to the shaft) direction and the radial direction while in the axial turbine case the exhaust gas is guided from the radial direction, through a specially shaped volute and inducer, towards an axial direction prior to entering the axial turbine and the exhaust gas subsequently exits the rotor in the axial direction.

A reduced turbocharger turbine inertia means a quicker time to achieve a set torque target by the engine. Despite these improvements, variable geometry designs for both mixed and axial turbines designs have been developed subsequently, to further improve transient turbocharger response in order to improve vehicle dynamics response as well as further improve turbine efficiency.

Two known VGTs for a mixed flow turbine are described in US4776168 and WO2006/061588 A1.

One known VGT on an axial flow turbine is described in US7571607.

The above two disclosures relate to an axially translatable flow restrictor in the first instance and an array of pivoting vanes, circumferentially arranged around the rotating hub immediately forward of the axial turbine rotor in the second instance.

In the first instance (US4776168 and WO2006/061588 A1), the geometry of the leading edge of the mixed flow rotor and the geometry of the flow restrictor member, create an interspace gap that lends itself to degrading aerodynamics flow phenomena and pressure recovery loss as the flow is accelerated and then allowed to decelerate again, unevenly along the length of the mixed flow rotor.

In the second instance (US7571607), the pivoting vane array described is also the preferred variable geometry solution for radial turbines as well. However and in particular for gasoline engine applications, the plurality of vanes present means that manufacturing of these represents a substantial additional manufacturing cost while reliability of their operation remains an issue for gasoline engine applications Further examples of flow control devices for turbochargers having a turbine of either axial or mixed flow geometry are shown by WO 2012/071254 A2, DE 39 41 399 C1, GB 2 461 720 A.

The present invention seeks to provide an improved turbocharger having a turbine of either axial or mixed flow geometry. The invention is not relevant to radial turbines.

### SUMMARY OF INVENTION

According to the present invention, as defined by appended independent claim 1, for example there is provided a turbocharger, comprising the flow control device according to the present invention, the turbocharger comprising a turbine for driving a compressor wherein the turbine has a shaft of rotation, and wherein the turbine is of either axial or mixed flow geometry, an inlet for fluid entering the turbine, an outlet for fluid exiting the turbine, and a flow restrictor positioned in the inlet for restricting the flow of fluid entering the turbine, the flow restrictor being moveable between a first less restricting position and a second more restricting position, wherein the flow restrictor is shaped so as to guide fluid towards the turbine and to avoid fluid being trapped in the inlet, furthermore comprising all further features mentioned in appended independent claim 1.

The flow restrictor has a tapered section with a degree of inward curvature which acts as a flow guide for fluid entering the turbine.

Preferably, the axis of movement of the flow restrictor from the first to the second position is parallel to the axis defined by the shaft of the turbine.

In one embodiment, the turbocharger may additionally comprise an actuator for varying the position of the flow restrictor, a sensor for sensing the inlet pressure, and a controller to control the actuator to provide a flow restrictor position dependent on the sensed pressure. It may further comprise a flow restrictor position sensor to enable closed loop position control.

According to a second aspect of the invention, there is provided a flow control device for a turbocharger as defined above.

According to a third aspect of the invention, there is provided a flow control device for a turbocharger, as defined above, comprising a variably positionable flow restrictor for restricting flow in a turbocharger turbine inlet by an amount dependent on the flow restrictor position, an actuator for varying a flow restriction position of the flow restrictor, a sensor for sensing a measure of turbo charger inlet pressure, and a controller arranged to control the actuator to provide a flow restriction position dependent on the sensed pressure. The flow restrictor incorporates a degree of tapering such as to allow at least partial conforming to the turbine inlet passage contours in order, when extended into the exhaust gas stream to reduce the interspace gap between the flow restrictor means and the turbine rotor.

Thus, it will be understood that, in overview, the invention provides a flow restrictor member that will follow to a certain extent the hub contours and therefore have a degree of tapering. The flow restrictor member is disposed within a turbine housing, between a primary exhaust gas source and the turbine blades. The flow restrictor member is attached at the back of the turbine housing to a driving mechanism which axial, linear motion. The driving mechanism can consist of any number of actuator types capable of providing adequate axial force such that the flow restrictor can enter the exhaust gas passage inside the volute despite the aerodynamic forces imposed upon it by the incoming exhaust gas flow. Sensors are provided to measure boost pressure at compressor outlet and to measure the rotational speed of the turbocharger shaft. This information is routed to a controller which undertakes to position the contoured or tapered flow restrictor to a position in the inlet passage of the turbine. As a result there is provided a system for providing variable inlet geometry of a turbocharger turbine with minimal interspace gap between the flow restrictor member and the leading edge of a mixed or axial turbine for use in internal combustion engines.

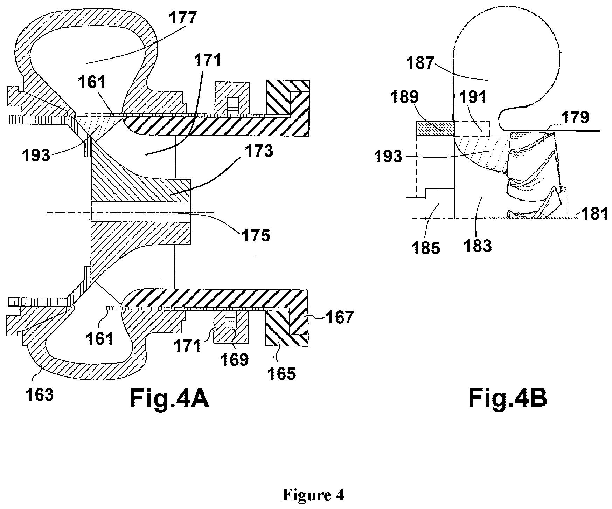

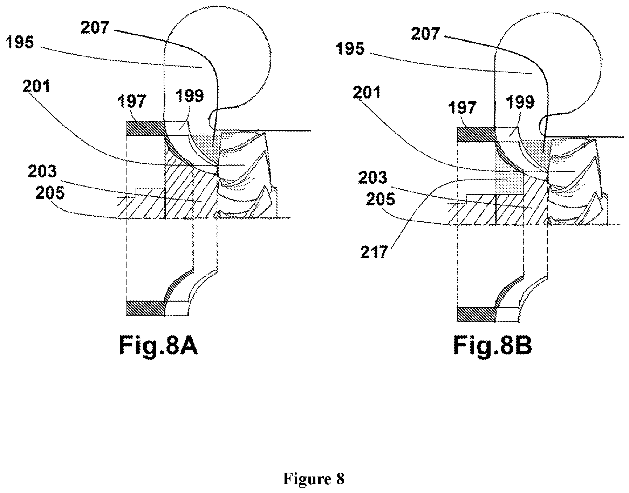

Advantages of at least some embodiments include:
1. The flow restrictor member follows the contours of the rotatable hub on which the axial or mixed flow turbine blades are mounted. By having this specific profile the axially translatable flow restrictor can effectively provide conversion of the flow from the radial to the axial or mixed flow direction while providing flow restriction throughout without creating an interspace gap between flow restrictor and turbine rotor (either axial or mixed flow) which leads to flow losses. It should be noted that this problem of the interspace gap does not arise with radial turbines and so the present invention is not relevant to such turbines.
2. Higher efficiency variable geometry operation: this advantage stems from 1. above since the losses at the interspace gap are reduced and because of the fact that the flow momentum is better preserved at rotor inlet compared to the case of a conventional system being used (Fig.4B).
3. The tapered or contoured flow restrictor also allows the retention of the traditional advantages of axially translatable flow restrictor members compared to conventional pivoting vane variable geometry systems such as simpler, single-piece construction of lower cost and higher reliability while preserving the performance of more conventional (i.e., radial), axially translatable flow restrictor systems.
4. Lower inertia rotor compared to current axial turbines (Fig.8): since component '203' (in Fig.8A) is not exposed to the exhaust flow to a large extent but is covered by the tapered nozzle, its conical profile can be substantially reduced ('217' in Fig.8B), thus offering improved transient response compared to conventional axial turbines.

### BRIEF DESCRIPTION OF THE DRAWINGS

Embodiments of the invention will be described below, by way of example only, with reference to the accompanying drawings, in which:

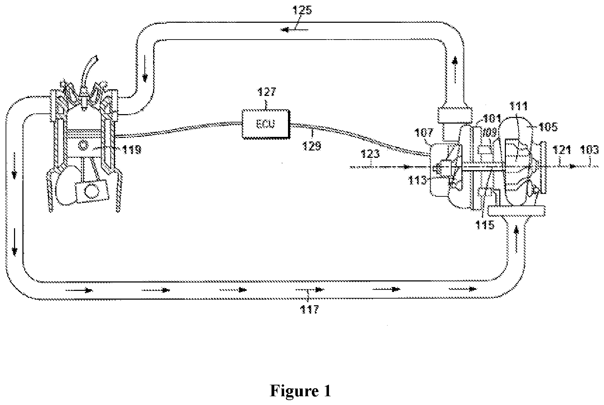

Figure 1 is a system overview of a prior art turbocharged internal combustion engine.

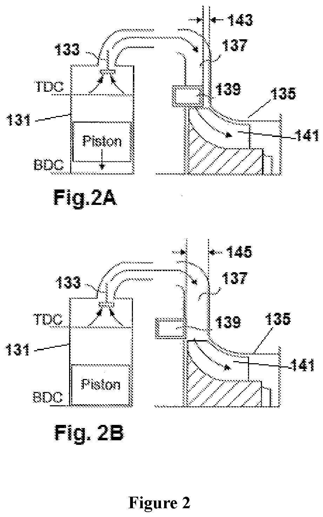

Figure 2 is a sectional view of a prior art, conventional radial-inflow turbocharger turbine with adjustable means of the exhaust gas passage at the turbine inlet being provided by a conventional sliding nozzle flow restrictor member. The principle of variable geometry is provided in this drawing for closed nozzle position (Fig.2A) and open nozzle position (Fig.2B).
Figure 3 illustrates the operation of a prior art, conventional radial-inflow turbocharger turbine with adjustable means of the exhaust gas passage at the turbine inlet being provided by a conventional pivoting vane flow restrictor array.
Figure 4 illustrates a sectional view of a prior art, mixed flow turbocharger turbine (Fig.4A) and a sectional view of an axial turbocharger turbine (Fig.4B) with adjustable means of the exhaust gas passage at the turbine inlet being provided by a conventional sliding nozzle flow restrictor member in both cases with the interspace gap between the exit of the flow restrictor and the inlet to the turbine rotor highlighted.

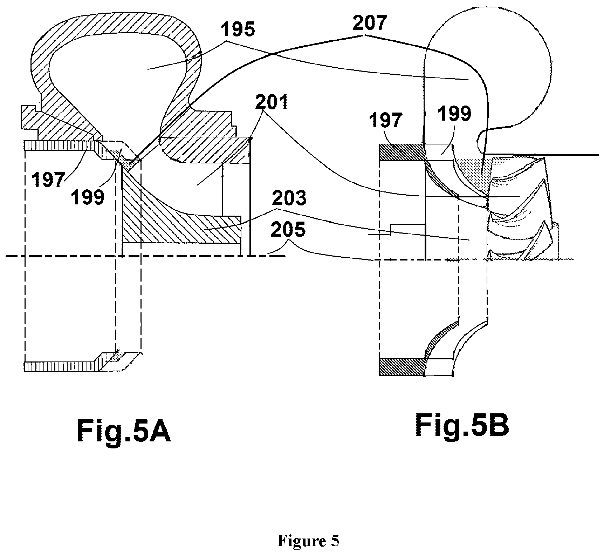

Figure 5 is a sectional view of the present invention disclosure whereby a tapered sliding nozzle low restrictor is provided such that its contours follow the internal geometry of the turbine inlet casing. The invention disclosure is applicable to both mixed flow turbines (Fig.5A) as well as axial turbines (Fig.5B) .This tapering of a sliding nozzle flow restrictor offers minimisation of the interspace gap especially at the higher turbine inlet area restrictions.

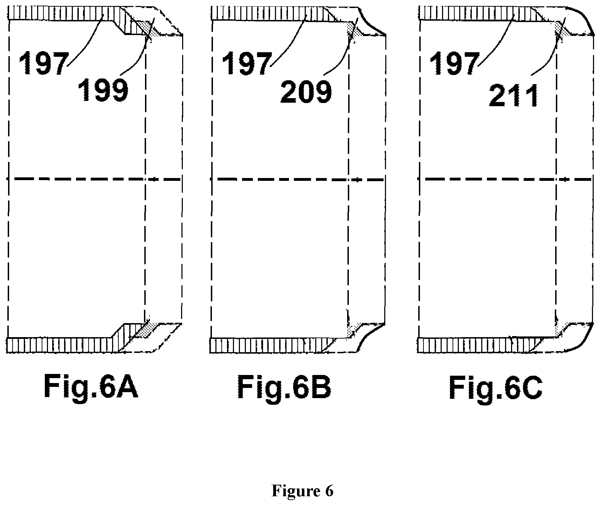

Figure 6 is a sectional view of the mixed flow turbine sliding nozzle flow restrictor illustrating in Fig.6A straight tapering, in Fig.6B inwardly-curved contouring and in Fig.6C, outwardly-curved contouring. The same options apply to the axial turbine flow restrictor of Fig.5B. Only inwardly-curved contouring lies within the scope of the present invention. The further alternatives shown lay outside the present invention but are helpful to understand the present invention.

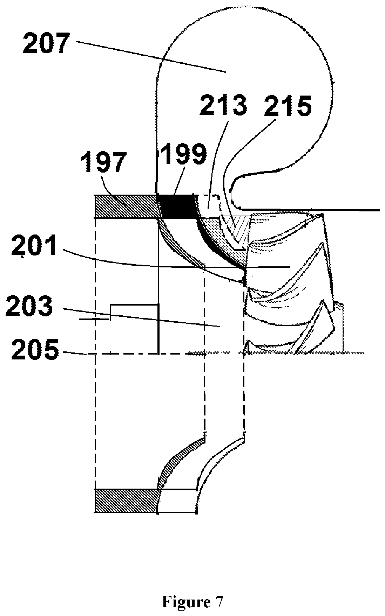

Figure 7 is a sectional view of the axial flow turbine sliding nozzle flow restrictor from Fig.5B, illustrating the option of using a shorter tapered section, 213, for the flow restrictor (compared to the longer tapered flow restrictor, 199, in Fig.5B) in order to enable a higher degree of restriction when comparing the resultant available passage area, 215, for the exhaust flow from which to enter the axial turbine rotor, 201, compared to the available area, 207, in Fig.5B.
Figure 8A is a sectional view of the axial flow turbine sliding nozzle flow restrictor from Fig.5B, illustrating the option (in Fig.8B) of using a lower mass (and therefore) inertia hub design, 203. The mass that can be potentially removed is highlight in light grey in Fig.8B (217).

### DETAILED DESCRIPTION OF CERTAIN EXAMPLE EMBODIMENTS

The following embodiments relate generally to an exhaust gas driven turbocharger and, more particularly, to a variable-geometry turbine turbocharger. In these embodiments, the turbine contains an adjustable inlet flow control mechanism comprising of a single axially translatable flow restrictor member. This is to increase overall internal combustion engine efficiency as the turbocharger is connected to, driven by and boosts an internal combustion engine. Embodiments differ from existing variable geometry arrangements in the following ways: the flow restrictor member follows the contours of the rotatable hub on which the axial turbine blades are mounted. By having this specific profile the axially translatable flow restrictor can effectively provide conversion of the flow from the radial to the axial or mixed flow direction while providing flow restriction throughout. By comparison, axially translatable members described in other inventions disclosures (e.g. US4776168) do not provide hub contour geometry and therefore create an interspace gap between flow restrictor and turbine rotor (either axial or mixed flow) which leads to flow losses as described in the Background to this invention disclosure. The contoured flow restrictor also allows the retention of the traditional advantages of axially translatable flow restrictor members compared to pivoting vane variable geometry systems described earlier (e.g. US7571607) such as simpler, single piece construction of lower cost and higher reliability while preserving the performance of more conventional (i.e., radial), axially translatable flow restrictor systems. Embodiments of the invention comprise at least all features of appended independent claim 1. Embodiments not comprising all features of appended independent claim 1 do not form part of the invention but are helpful to understand the invention.

With reference to Figure 1, a typical turbocharger 101 having a radial turbine includes a turbocharger housing and a rotor configured to rotate within the turbocharger housing along an axis of rotor rotation 103.The turbocharger housing includes a turbine housing 105, a compressor housing 107, and a bearing housing 109 (i.e.,a centre housing that contains the bearings) that connects the turbine housing to the compressor housing. The rotor includes a turbine wheel 111 located substantially within the turbine housing, a compressor wheel 113 located substantially within the compressor housing, and a shaft 115 extending along the axis of rotor rotation, through the bearing housing, to connect the turbine wheel to the compressor wheel.

The turbine housing 105 and turbine wheel 111 form a turbine configured to circumferentially receive a high pressure and high temperature exhaust gas stream 117 from an engine, 119. The turbine rotor is driven in rotation around the axis of rotor rotation 103 by the high-pressure and high-temperature exhaust gas stream, which becomes a lower-pressure and lower-temperature exhaust gas stream 121 and is axially released into an exhaust system (not shown).

The compressor housing 107 and compressor wheel 113 form a compressor stage. The compressor wheel, being driven in rotation by the exhaust-gas driven turbine wheel 111, is configured to compress axially received input air (e.g., ambient air 123, or already-pressurised air from a previous-stage in a multi-stage compressor) into a pressurised air stream 125 that is ejected circumferentially from the compressor.

Optionally, the pressurized air stream may be channeled through a convectively cooled charge air cooler configured to dissipate heat from the pressurized air stream, increasing its density. The pressurized output air stream 125 is channeled into an internal combustion engine, 119, or alternatively, into a subsequent-stage, in-series compressor. The operation of the system is controlled by an ECU (engine control unit), 127, that connects to the remainder of the system via communication connections 129.

Figure 2 provides a sectional view of a prior art, conventional radial-inflow turbocharger turbine with adjustable means of the exhaust gas passage at the turbine inlet being provided by a conventional sliding nozzle flow restrictor member. The principle of variable geometry is provided in this drawing (Figure 2A and 2B). In Figure 2A the engine cylinder or cylinders, 131, are undergoing an exhaust process whereby, the piston is moving from a low position inside the cylinder bore towards the Bottom Dead Centre (BDC) and back up towards the Top Dead Centre (TDC) during which time an exhaust valve or valves, 133, are open allowing exhaust gas to escape toward a turbocharger turbine, 135. At the inlet to the turbocharger turbine, 137, there is disposed an axially translatable, flow restrictor, variously referred to in practice as a sliding wall, sliding nozzle or slidevane. This is a cylindrical member, concentrically disposed around the circumference of the turbine rotor, 139. It can translate axially inside the turbine inlet passage, 137, and reduce the cross-sectional area available for the flow to pass through and reach the turbine. This has the effect of the accelerating the flow, which therefore, enters the turbine rotor, disposed immediately downstream of the flow restrictor member, 139, and cause a higher momentum flow to impact the rotor blades which in turn creates acceleration of the rotor to a higher rotational speed. This higher rotational speed is then transmitted to the turbocharger compressor, 113 in Figure 1, which is then able to draw in and pressurise more air and thereby more boost and therefore more power to the engine compared to an un-restricted turbine inlet system in a turbocharger also known in practice as a fixed geometry turbocharger turbine. At low engine speeds and loads, the amount of exhaust gas produced is minimal, necessitating the maximum flow restriction practical in a variable geometry turbocharger turbine, 143, in Figure 2A. It is this restriction that causes high momentum flow to impact the turbine rotor blades and therefore allows the turbocharger to accelerate in order to provide engine boost pressure. When the engine is operated at a condition where the engine speed and load provide significant to maximum exhaust mass flow, the flow restrictor, 139, is adjusted to allow a maximum turbine inlet passage area, 145, so that the momentum rise of the exhaust gas flow does not surpass the turbocharger rotational speed limit (Figure 2B).

Figure 3 illustrates the operation of a prior art, conventional radial-inflow turbocharger turbine with adjustable means of the exhaust gas passage at the turbine inlet being provided by a conventional pivoting vane flow restrictor array. In Figure 3A a section of the turbocharger turbine is provided in which exhaust gas flow, 159, is directed through an opening of the turbine inlet casing (volute), 147. The flow is directed towards an array of pivoting vanes, 151, which provide flow guidance according to the engine operating requirements towards a turbine rotor, 149. The array of pivoting vanes is radially disposed around the circumference of the turbine rotor, 149, and is individually pivotable as a result of rotational motion of a steering pivot, 153, connected through a pivoting pivot lever, 155, to a circular nozzle control ring, 157, on which all pivoting vanes are mounted. The nozzle control ring is rotated to effect pivoting motion of all pivoting vanes in unison. Rotation of the nozzle control ring can be effected by various means of actuation such as electro-pneumatic, electrohydraulic, servo-electric or electro-magnetic. When the engine is operated at high engine speeds and loads, there is provided a substantial amount of exhaust gas mass to the turbocharger turbine and therefore the flow is directed in a substantially radial direction such that the turbine rotor will not overspeed (Fig.3B). When the engine is operated at low engine speeds and loads, there is provided a small amount of exhaust gas mass to the turbocharger turbine and in the event of a required transient operation from low-to-high engine speed and load the vanes have to guide the flow in a substantially tangential direction in order to impart momentum onto the turbine rotor blades. The rotation of the pivoting vane array, 151, 153, 155, 157, towards a more tangential direction in relation to the turbine rotor blade leading edges creates an additional flow passage restriction between consecutive vanes which allows the flow to accelerate (Fig.3C). This accelerated flow is also then, as a result of the tangential direction of the flow cause the turbine rotor to accelerate faster than a conventional turbocharger turbine with fixed (non-pivoting) vanes or without any vanes at all.

Figure 4 illustrates a sectional view of a prior art, mixed flow turbocharger turbine (Fig.4A) and a sectional view of an axial turbocharger turbine (Fig.4B) with adjustable means of the exhaust gas passage at the turbine inlet being provided by a conventional sliding nozzle flow restrictor member in both cases (161 and 189, respectively) with the detrimental interspace gap between the exit of the flow restrictor and the inlet to the turbine rotor created as a results of the two respective geometries (193 in both Fig4A and Fig4.B) being highlighted .

Fig.4A is a prior art embodiment found in WO2006/061588 A1. In this embodiment, a conventional sliding nozzle flow restrictor member, 161, is incorporated into a turbine inlet casing (volute) structure formed by members 163 on the outside and 165 on the inside of the volute exit member is used to attach member 167 onto 163. A yoke system, 171, is mounted on the flow restrictor, 161, and the yoke is driven by an external actuator (not shown) and transmits its rotational motion onto the flow restrictor, 163, via a pivot point, 169, which translates rotational motion into linear. The location of the flow restrictor is immediately upstream of the turbine rotor, 171. The rotor blades are cast into a rotating hub, 173, and protrude radially outwards from it. The rotor is of mixed flow geometry so the leading edge of the rotor blade does not align itself to the axis of shaft rotation of the turbocharger, 175. This creates a space between the exit of the flow restrictor, 161 and the inlet to the turbine rotor blade leading edge (171) and is highlighted as the shaded area 193 in Figure 4.A.

Fig.4B is a prior art embodiment similar in effect to the one found in US4776168. In this embodiment, a conventional sliding nozzle flow restrictor member, 189, is incorporated into a turbine inlet casing (volute) structure. The flow restrictor member, 189, may be actuated by a similar mechanism and actuator as in Fig.4A. The location of the flow restrictor is upstream of the turbine rotor, 179. The rotor blades are cast into a rotating hub, 183, and protrude radially outwards from it. The rotor is of axial flow geometry this rotor receives exhaust gas axially (in relation to the axis of shaft rotation of the turbocharger, 181) from the volute inlet, 187, and this exhaust gas flow exits axially as well. Because of the fact that the volute is accepts exhaust gas flow radially and guides to an axial direction prior to entry into the axial turbine's rotor blades, 179, and the unique rotating (about axis, 181 on shaft, 185) hub geometry , 183, which allows this radial-to-axial flow conversion a space is created between the exit of the flow restrictor, 189, when it is protruding into the flow to allow flow restriction, 191, and therefore energy recovery and the inlet to the turbine rotor blade leading edge, 179 which is detrimental to the performance of the rotor due to a large region of flow deceleration forming before the flow can reach the turbine rotor blades, 179. This interspace is highlighted as the shaded area 193 in Figure 4.B.

Figure 5 illustrates a sectional view of the present invention disclosure whereby a tapered sliding nozzle flow restrictor, 197, is provided such that its contours follow the internal geometry of the turbine inlet casing. The invention disclosure is applicable to both mixed flow turbines (Fig.5A) as well as axial turbines (Fig.5B) .This tapering of a sliding nozzle flow restrictor offers minimisation of the interspace gap, 207, especially at the higher turbine inlet area restrictions.

Specifically, in Fig.5A, a mixed flow turbine is illustrated, where exhaust flow is guided from a turbine inlet casing, 195, through a sliding nozzle flow restrictor, 197, into a turbine rotor, 201 and exits into the atmosphere through piping attached at the exit to the turbine (not shown). The tapered, axially translatable flow restrictor, 197, is positioned radially and outside of the turbine rotor hub, 203. The turbine rotor blades, 201, are attached to a rotating hub, 203, and are projected radially outwards from it. The hub, 203, and turbine rotor blades are rotated around a shaft axis of rotation, 205. When the engine operating conditions are such that the mass of exhaust gas flow is relatively small, then the flow restrictor is translated axially into the turbine rotor upstream passage known as the throat section, up to a maximum level of restriction, 199. Due to the degree of tapering in the nozzle, the detrimental-to-turbine-performance interspace gap, 199, between flow restrictor and turbine rotor blade leading edge is minimised when compared to the equivalent interspace gap in Fig.4A.

In Fig.5B, an axial flow turbine is illustrated, where exhaust flow is guided from a turbine inlet casing, 195, through a sliding nozzle flow restrictor, 197, into a turbine rotor, 201 and exits into the atmosphere through piping attached at the exit to the turbine (not shown). The tapered, axially translatable flow restrictor, 197, is positioned radially and outside of the turbine rotor hub, 203. The turbine rotor blades, 201, are attached to a rotating hub, 203, and are projected radially outwards from it. The hub, 203, and turbine rotor blades are rotated around a shaft axis of rotation, 205. When the engine operating conditions are such that the mass of exhaust gas flow is relatively small, then the flow restrictor is translated axially into the turbine rotor upstream passage known as the throat section, up to a maximum level of restriction, 199. Due to the degree of tapering in the nozzle, the detrimental-to-turbine-performance interspace gap, 199, between flow restrictor and turbine rotor blade leading edge is minimised when compared to the equivalent interspace gap in Fig.4B.

Figure 6 illustrates a sectional view of the mixed flow turbine sliding nozzle flow restrictor illustrating in Fig.6A straight tapering not forming part of the present invention, in Fig.6B inwardly-curved contouring according to the present invention and in Fig.6C, outwardly-curved contouring not forming part of the present invetion. These are options for the design of the flow restrictor depending on the degree to which the contouring of the internal flow passage of the turbine inlet casing, 195 in Fig.5, is required to be followed. The same options apply to the design of axial turbine flow restrictor of Fig.5B.

Figure 7 illustrates a sectional view of the axial flow turbine sliding nozzle flow restrictor from Fig.5B, illustrating the option of using a shorter tapered section, 213, for the flow restrictor (compared to the longer tapered flow restrictor, 199, in Fig.5B) in order to enable a higher degree of restriction when comparing the resultant available passage area, 215, for the exhaust flow from which to enter the axial turbine rotor, 201, compared to the available area, 207, in Fig.5B. It is understood that any length may be chosen according to the turbocharger designer's perception of the turbocharger turbine operating requirement and the same applies to the design of the level of direction of curvature of the tapered section for either mixed or axial turbine flow restrictor in Fig. 6, wherein a curvature according to the invention as defined in appended independent claim 1 can be chosen. Any curvature not corresponding to the description of appended independent claim 1 does not form part of the present invention but is merely helpful to understand the invention.

Figure 8A illustrates a sectional view of the axial flow turbine sliding nozzle flow restrictor of Fig.5B, illustrating the option (in Figure 8B) of using a lower mass (and therefore) inertia hub design, 217. Since the tapered nozzle section already covers in part the hub cross section, there is no need for a hub cross sectional area indicated in light grey in Figure 8B and it can thus be removed, thus reducing the mass of the rotatable hub substantially. This inertia is therefore reduced by (1) the reduction in mass and by the fact that the removed mass is removed from the outer radius of the hub ('217' in Figure 8) thus reducing the polar moment of inertia even further compared to the case of an equivalent mass being removed from a lower radius (i.e., closer to the axis of rotation of the shaft, '205' in Figure 8B).

All optional and preferred features and modifications of the described embodiments and dependent claims are usable in all aspects of the invention taught herein. Furthermore, the individual features of the dependent claims, as well as all optional and preferred features and modifications of the described embodiments are combinable and interchangeable with one another. The invention is defined by appended claims and any embodiment falling into the scope of the invention comprises at least all features of appended independent claim 1.

## Claims

1. A flow control device for a turbocharger having a turbine of either axial or mixed flow geometry, the device comprising
an inlet (195) for fluid entering the turbine,
a flow restrictor (197) positioned in the inlet for restricting the flow of fluid entering the turbine, the flow restrictor being moveable between a first less restricting position and a second more restricting position,
wherein the flow restrictor is shaped so as to guide fluid towards the turbine and to avoid fluid being trapped in the inlet,
wherein the flow restrictor has a tapered section (209) with a degree of inward curvature which acts as a flow guide for fluid entering the turbine.

2. A turbocharger comprising
a turbine (201) for driving a compressor wherein the turbine has a shaft of rotation and wherein the turbine is of either axial or mixed flow geometry, and a flow control device as claimed in claim 1.

3. A turbocharger as claimed in claim 2, wherein the axis of movement of the flow restrictor from the first to the second position is parallel to the axis (205) defined by the shaft of the turbine.

4. A turbocharger as claimed in claim 2 or 3, additionally comprising an actuator for varying the position of the flow restrictor, a sensor for sensing the inlet pressure, and a controller to control the actuator to provide a flow restrictor position dependent on the sensed pressure.

5. A turbocharger as claimed in claim 4, further comprising a flow restrictor position sensor to enable closed loop position control.

6. An internal combustion engine including a turbocharger as claimed in any of claims 2 to 5.

7. A vehicle including an internal combustion engine as claimed in claim 6.

## Patentansprüche

1. Durchflusskontrollvorrichtung für einen Turbolader mit einer Turbine mit axialer oder gemischter Durchflussgeometrie, wobei die Vorrichtung aufweist
einen Einlass (195) für in die Turbine eintretendes Fluid,
einen Durchflussbegrenzer (197), der im Einlass positioniert ist, um den Durchfluss von in die Turbine eintretendem Fluid zu begrenzen, wobei der Durchflussbegrenzer zwischen einer ersten, weniger einschränkenden Position und einer zweiten, stärker einschränkenden Position bewegbar ist,
wobei der Durchflussbegrenzer so geformt ist, dass er Fluid zur Turbine leitet und verhindert, dass Fluid im Einlass eingeschlossen wird,
wobei der Strömungsbegrenzer einen konischen Abschnitt (209) mit einem Grad der Einwärtskrümmung aufweist, der als Strömungsführung für in die Turbine eintretendes Fluid dient.

2. Turbolader, umfassend
eine Turbine (201) zum Antreiben eines Verdichters, wobei die Turbine eine Drehwelle aufweist und wobei die Turbine entweder eine axiale oder eine gemischte Strömungsgeometrie aufweist, und eine Durchflusskontrollvorrichtung nach Anspruch 1.

3. Turbolader nach Anspruch 2, wobei die Bewegungsachse des Durchflussbegrenzers von der ersten zur zweiten Position parallel zu der durch die Welle der Turbine definierten Achse (205) verläuft.

4. Turbolader nach Anspruch 2 oder 3, der zusätzlich einen Aktuator zum Variieren der Position des Durchflussbegrenzers, einen Sensor zum Erfassen des Einlassdrucks und einen Controller zum Steuern des Aktuators aufweist, um eine Durchflussbegrenzungsposition in Abhängigkeit vom erfassten Druck bereitzustellen.

5. Turbolader nach Anspruch 4, ferner umfassend einen Durchflussbegrenzer-Positionssensor, um eine Positionssteuerung im geschlossenen Regelkreis zu ermöglichen.

6. Verbrennungsmotor mit einem Turbolader nach einem der Ansprüche 2 bis 5.

7. Fahrzeug mit einem Verbrennungsmotor nach Anspruch 6.

## Revendications

1. Dispositif de contrôle de débit pour un turbocompresseur ayant une turbine de géométrie à écoulement mixte ou axial, le dispositif comprenant :
une entrée (195) pour du fluide entrant dans la turbine,
un limiteur de débit (197) positionné dans l'entrée pour limiter le débit de fluide entrant dans la turbine, le limiteur de débit étant mobile entre une première position de limitation moindre et une seconde position de plus grande limitation,
le limiteur de débit étant conformé de façon à guider du fluide vers la turbine et à empêcher du fluide d'être piégé dans l'entrée,
le limiteur de débit ayant une section effilée (209) avec un degré de courbure vers l'intérieur qui sert de guide d'écoulement pour le fluide entrant dans la turbine.

2. Turbocompresseur comprenant :
une turbine (201) pour entraîner un compresseur, la turbine ayant un arbre de rotation et la turbine étant d'une géométrie à écoulement mixte ou axial, et un dispositif de contrôle de débit selon la revendication 1.

3. Turbocompresseur selon la revendication 2, dans lequel l'axe de mouvement du limiteur de débit de la première position à la seconde position est parallèle à l'axe (205) défini par l'arbre de la turbine.

4. Turbocompresseur selon la revendication 2 ou 3, comprenant également un actionneur pour faire varier la position du limiteur de débit, un capteur pour détecter la pression d'entrée, et un dispositif de commande pour commander l'actionneur pour fournir une position de limiteur de débit en fonction de la pression détectée.

5. Turbocompresseur selon la revendication 4, comprenant en outre un capteur de position de limiteur de débit pour permettre une commande de position en boucle fermée.

6. Moteur à combustion interne comprenant un turbocompresseur selon l'une quelconque des revendications 2 à 5.

7. Véhicule comprenant un moteur à combustion interne selon la revendication 6.
